# EUROPÄISCHE PATENTSCHRIFT

(11) **EP 1 301 369 B1**
(45) Veröffentlichungstag und Bekanntmachung des Hinweises auf die Patenterteilung: **08.09.2004**
(21) Anmeldenummer: 01953654.9
(22) Anmeldetag: 19.07.2001
(51) Int. Cl.: B60K 17/346

(54) **VERTEILERGETRIEBE FÜR KRAFTFAHRZEUGE MIT GELÄNDEGANG UND VERSETZTEM ABTRIEB**
POWER DIVIDER FOR MOTOR VEHICLES COMPRISING AN OFF-ROAD SPEED GEAR AND A SET-OFF OUTPUT
BOITE DE VITESSES INTERMEDIAIRE POUR VEHICULES AUTOMOBILES COMPORTANT UN RAPPORT TOUT TERRAIN ET UNE SORTIE DECALEE

(30) Priorität: 19.07.2000 AT 5302000 U
(43) Veröffentlichungstag der Anmeldung: 16.04.2003
(73) Patentinhaber: Engineering Center Steyr GmbH & Co KG, 4300 St. Valentin (AT)
(72) Erfinder: GLASSNER, Rudolf, A-3623 Kottes (AT)
(74) Vertreter: Kovac, Werner
(86) Internationale Anmeldenummer: PCT/AT2001/000248
(87) Internationale Veröffentlichungsnummer: WO 2002/008007

(56) Entgegenhaltungen:
- EP-A- 0 925 986
- EP-A- 0 943 479

## Beschreibung

Die Erfindung handelt von einem Verteilergetriebe für Kraftfahrzeuge mit Geländegang, bestehend aus einem Gehäuse, einer Eingangswelle, einer mit dieser koachsialen ersten Ausgangswelle, einer gegenüber dieser versetzten zweiten Ausgangswelle, einer Untersetzungseinheit, einer Kupplungseinheit und einem Versatztrieb. Diese Form von Verteilergetrieben wird auch als "single-offset" bezeichnet. Sie wird vor allem für allradgetriebene Personenkraftfahrzeuge und leichte Nutzfahrzeuge mit längsliegendem Motor-Getriebeblock eingesetzt, wobei mittels der Untersetzungseinheit vom Straßengang in einen Geländegang umgeschaltet werden kann, oft auf ein Zwischenachsdifferential verzichtet und der Antrieb der zweiten angetriebenen Achse zuschaltbar ist.

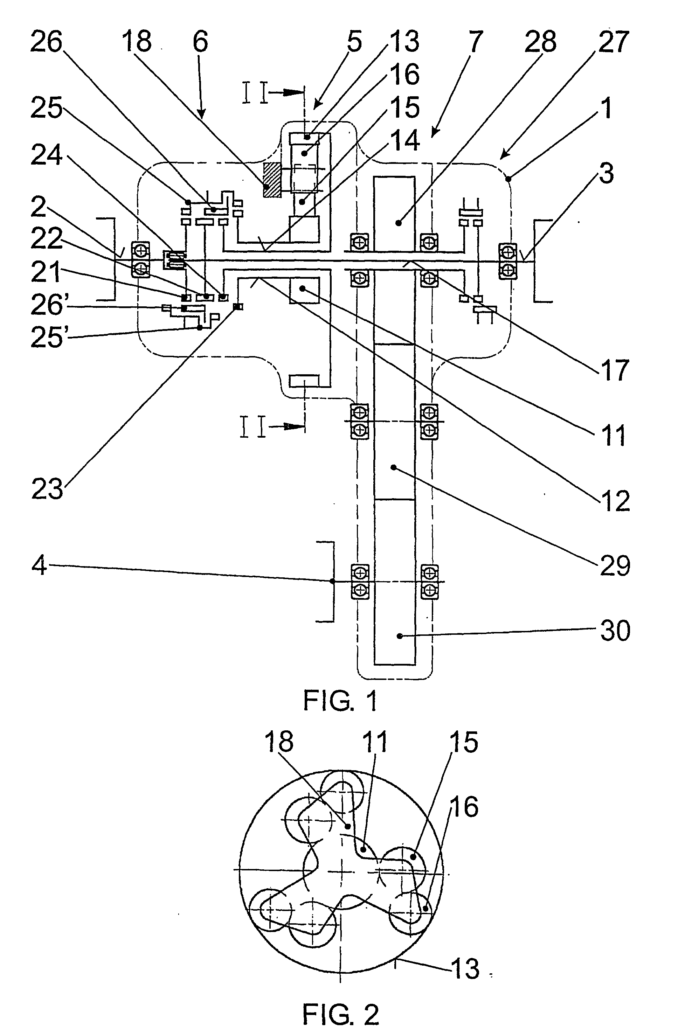

Ein gattungsgemäßes Verteilergetriebe ist aus der EP 943 479 A1 bekannt. Bei diesem ist die Untersetzungseinheit auf der Seite der Eingangswelle ein Planetengetriebe mit gehäusefestem Hohlrad und Abtrieb am Planetenträger. Gleich dahinter ist die zugehörige Schaltvorrichtung untergebracht. Darauf folgt in einer Ausführungsform (Fig.2) ein Zentraldifferential und dann das treibende Rad des Versatztriebes; in einer anderen Ausführungsform (Fig.9) das treibende Rad des Versatztriebes und schließlich eine Kupplung für die Zuschaltung der zweiten angetriebenen Achse.

Wegen des gehäusefesten Hohlrades läuft das Planetengetriebe auch im Strassengang kämmend mit, was Verluste, Verschleiß und Geräuschentwicklung erhöht. Zudem ergeben sich bei einstufigen Planetengetrieben dieser Bauart bei der Auslegung für die für einen Geländegang üblichen Untersetzungen (2:1 bis 3:1) ungünstig kleine Planetenräder. Die Schaltvorrichtung zwischen Planetengetriebe und treibendem Rad des Versatztriebes ist nicht gut zugänglich, erhöht die Baulänge und verschiebt den Versatztrieb nach hinten, letzteres ist unter anderem aus Gründen der Körperschallabstrahlung durch das Gehäuse ungünstig.

Es ist daher Ziel der Erfindung, vor diesem Hintergrund, ein Verteilergetriebe zu schaffen, das kurz und kompakt, verlust- und geräuscharm und auch für die Modularisierung und Anbringung einer Synchronisation geeignet ist.

Erfindungsgemäß wird das mit den kennzeichnenden Merlanalen des Hauptanspruches erreicht. Die Untersetzungseinheit bildet ein Festwellengetriebe, könnte aber auch als Planetengetriebe mit gehäusefestem Planetenträger und einem Ravigneaux-Satz bezeichnet werden. Die beiden Zwischenzahnräder verhindern Drehrichtungsumkehr zwischen Antrieb und Abtrieb und geben bei der Realisierung der Untersetzung große Gestaltungsfreiheit. Untersetzungen zwischen 2:1 und 3:1 sind optimal zu verwirklichen. Ein weiterer Vorteil des gehäusefesten Planetenträgers besteht darin, dass das zentrale Antriebszahnrad und das zentrale Hohlrad durch die Zwischenräder zentriert werden, sodass sie keine eigenen Radiallager brauchen. Es genügen Achsiallager, die bei Schrägverzahnung sowieso nötig sind.

Zusammen mit den Hohlwellen und der erfindungsgemäßen Kupplungseinheit wird noch ein besonderer Vorteil erzielt: Im Strassengang ist die Untersetzungseinheit nicht nur aus dem Kraftfluss genommen, sie kann sogar stillstehen. Der Durchtrieb von der Eingangswelle über die Kupplung zur Abtriebswelle ist direkt. So ist der Strassengang praktisch verlust- und geräuschlos.

Durch die beiden Hohlwellen kann die Kupplungseinheit aus der Untersetzungseinheit herausgezogen und vor oder hinter dieser angeordnet sein, was die Baulänge des Gehäuses vermindert und, wie später zu zeigen, die Hinzufügung einer Synchronisation begünstigt.

Die Kupplungseinheit besteht aus zwei Primärteilen und zwei Sekundärteilen, die im einfachsten Fall Schiebemuffenkupplungen sein können, die mittels der beiden Schaltmuffen in verschiedener Weise miteinander verbindbar sind. Die erste Schaltmuffe dient der drehfesten Verbindung der Eingangswelle mit der ersten Hohlwelle im Geländegang, die zweite Schaltmuffe der drehfesten Verbindung der Eingangswelle mit der Abtriebswelle im Strassengang und der Verbindung der zweiten Hohlwelle mit der Abtriebswelle im Geländegang.

Die beiden Hohlwellen werden vorzugsweise nach vorne, auf der der Eingangswelle zugewandten Seite, aus der Untersetzungseinheit herausgeführt. In diesem Fall ist die zweite Hohlwelle innerhalb der ersten Hohlwelle angeordnet (Anspruch 2). Dadurch kann die Kupplungseinheit ausserhalb der Untersetzungseinheit angeordnet sein, wo sie gut zugänglich und im Durchmesser nicht beschränkt ist.

In einer besonders einfachen Ausführungsform ohne Zentraldifferential ist die Abtriebswelle über eine Zuschaltkupplung mit einem Treibrad des Versatzantriebes drehfest verbindbar (Anspruch 3). Damit kann das Gehäuse besonders kurz ausgeführt sein, soferne nicht bei modularer Bauweise dasselbe Gehäuse auch für eine Version mit Zentraldifferential verwendet wird.

In der bevorzugten Ausführungsform mit Zentraldifferential ist die Abtriebswelle mit einem als Planetengetriebe ausgeführten Zentraldifferential antriebsverbunden, von dessen zwei Achsantriebswellen jeweils eine über eine Zuschaltkupplung wahlweise mit einem Treibrad des Versatzantriebes drehfest verbindbar sind (Anspruch 4). Das als Planetengetriebe ausgeführte Zentraldifferential vergrößert die Baulänge nur geringfügig. Die Zuschaltkupplung kann hinter dem Planetengetriebe angeordnet sein, sodass auch die zweite Ausgangswelle relativ weit vorne ist. Insgesamt erzielt man so eine extrem kompakte Bauweise, weil die beiden Kupplungen nach vorne und nach hinten aus den Getrieben herausgezogen sind.

Die bevorzugte Ausführung des Zentraldifferentiales gemäß den Kennzeichnungsmerkmalen des Anspruches 5 als Ravigneaux-Satz bietet abgesehen von der kurzen Baulänge die Vorteile, dass das Verhältnis der der ersten und der zweiten Ausgangswelle zugemessenen Drehmomente nur durch die Wahl der Zähnezahl des Sonnenrades den fahrzeugs-pezifischen Erfordernissen angepasst werden kann, und dass keine Drehrichtungsumkehr stattfindet. Da dieser Vorteil auch auf die Untersetzungsstufe zutrifft, ist es leicht zu erreichen, dass das Hohlrad und das Differential-Hohlrad und/oder die Zwischenzahnräder und die Planetenräder Gleichteile sind (Anspruch 6). Die durch diese Maßnahme erreichte Kostenersparnis liegt auf der Hand.

In Weiterbildung der Erfindung weist die Zuschaltkupplung die Merkmale des Anspruches 7 auf. Die Kuppelteile sind im einfachsten Fall Naben mit Kuppelzähnen und hinter dem Zentraldifferential angeordnet. Dadurch besteht bei ihrer Gestaltung große Freiheit, die auch die Hinzufügung einer Synchronisierung gestattet. So können auch mit einer einzigen Kupplungsmuffe Zweiradantrieb, Vierradantrieb mit Längsausgleich über das Zentraldifferential und Vierradantrieb mit Differentialsperre gewählt und in sinnfälliger Reihenfolge geschaltet werden.

Bei Ausnutzung aller Vorteile können die Baugruppen des Verteilergetriebes so angeordnet sein, dass die Untersetzungseinheit und das Zentraldifferential unmittelbar benachbart sind, woran in Richtung hin zur ersten Ausgangswelle zuerst der Versatztrieb und dann die Zuschaltkupplung folgt (Anspruch 8). So werden die Einbaumaße minimiert, das Gehäuse wird kurz und steif, und der Versatztrieb kann sehr weit vorne angeordnet sein.

Auch steht durch Ausnutzung aller Vorteile für die Kupplungseinheit und für die Zuschaltkupplung so viel Bauraum zur Verfügung, dass die Kupplungen mit Synchronisierungen versehen werden können, an die bei dem großen Stufensprung zwischen Strassen- und Geländegang beziehungsweise bei der großen Drehzahldifferenz, wenn eine der Achsen die Bodenhaftung verliert, sehr hohe Ansprüche gestellt werden. Diese können durch große Durchmesser der synchronisierten Kupplungsteile erfüllt werden.

In einer besonders raffinierten Ausbildung der Kupplungseinheit ist die zweite Schaltmuffe gleich selbst drehfest, aber achsial verschiebbar mit der Abtriebswelle verbunden (Anspruch 9) und sind die erste Schaltmuffe und die zweite Schaltmuffe gemeinsam in Achsrichtung verschiebbar, jedoch mit achsialem Spiel, sodass beim Zurückschalten in den Geländegang zuerst die erste Schaltmuffe mit der ersten Hohlwelle synchronisert und dann die zweite Schaltmuffe mit der zweiten Hohlwelle (Anspruch 10). Somit erfolgt die Synchronisierung in zwei Stufen, zuerst für das kleinere Drehmoment zur Beschleunigung von Zentralrad und Zwischenrädern, und erst dann für das untersetzungsbedingt größere Drehmoment am Hohlrad. So ist auch in extremen Fahrzuständen ein sicheres Zurückschalten in den Geländegang während der Fahrt gewährleistet.

Bei synchronisierender Zuschaltkupplung weist die dritte Schaltmuffe erste Kuppelteile auf, die drehfest, aber achsial verschiebbar mit der zweiten Achsantriebswelle verbunden sind (Anspruch 11). Wenn weiters die dritte Schaltmuffe bezüglich der ersten Kuppelteile in achsialer Richtung verschiebbar ist (Anspruch 12), kann die dritte Schaltmuffe, ungehindert von den ersten Kuppelteilen, das Differential sperren.

Im folgenden wird die Erfindung anhand von Abbildungen einiger Ausführungsformen des Erfindungsgegenstandes beschrieben und erläutert. Es stellen dar:
- Fig. 1:: Einen schematischen Längsschnitt durch eine erste einfache Ausführungsform,
- Fig. 2:: Einen Querschnitt nach II-II in Fig. 1,
- Fig. 3:: Einen schematischen Längsschnitt durch eine zweite Ausführungsform,
- Fig. 4:: Einen Querschnitt nach IV-IV in Fig. 3,
- Fig. 5:: Einen schematischen Längsschnitt durch eine Variante der zweiten Ausführungsform mit Synchronisierung,
- Fig. 6:: Detail VI in Fig. 5, vergrößert,
- Fig. 7:: Detail VII in Fig. 5, vergrößert.

In Fig.1 ist das Gehäuse eines Verteilergetriebes nur angedeutet und mit 1 bezeichnet. Das Verteilergetriebe steht über eine Eingangswelle 2 mit einer nicht dargestellten Motor-Getriebe-Einheit in Verbindung, über eine erste mit der Eingangswelle 2 koachsiale Ausgangswelle 3 mit einer Achse, vorzugsweise der hinteren Achse eines allradgetriebenen Kraftfahrzeuges, und über eine zweite Ausgangswelle 4 mit einer zweiten angetriebenen Achse, vorzugsweise der Vorderachse. Im Gehäuse 1 sind als Baugruppen des Verteilergetriebes eine Untersetzungseinheit 5, eine Kupplungseinheit 6 und ein Versatztrieb 7 zum Antrieb einer der gegenüber der ersten Ausgangswelle 3 versetzten zweiten Ausgangswelle 4 untergebracht.

Fig. 2 zeigt die Eingriffverhältnisse in der Untersetzungseinheit 5. Die Untersetzungseinheit 5 besteht aus einem zentralen Antriebszahnrad 11 auf einer ersten Hohlwelle 12 (Fig. 1), einem zentralem Hohlrad 13 auf einer zweiten Hohlwelle 14 sowie aus mindestens zwei Zahnradpaaren 15,16. 15 ist jeweils ein erstes Zwischenzahnrad und 16 ein zweites Zwischenzahnrad, wobei jeweils das erstere 15 mit dem zentralen Antriebszahnrad 11, das zweite 16 mit dem zentralen Hohlrad 13 und beide 15,16 miteinander kämmen. Die ersten und zweiten Zwischenzahnräder 15,16 drehen sich um raumfeste Achsen, die Teil eines gehäusefesten Zwischenzahnradträgers 18 oder mit diesem fest verbunden sind.

Anordnungsbedingt umgibt die erste Hohlwelle 12, die zweite Hohlwelle 14. Innerhalb der zweiten Hohlwelle 14 ist eine Abtriebswelle 17 vorgesehen. Die beiden Hohlwellen 12,14 stellen die Verbindung zwischen der Untersetzungseinheit 5 und der Kupplungseinheit 6 dar, die Abtriebswelle 17 geht durch die Untersetzungseinheit 5 hindurch.

Die Kupplungseinheit 6 besteht aus einem drehfest mit der Eingangswelle 2 verbundenen ersten Primärteil 21, einem mit der Abtriebswelle 17 drehfest verbundenen ersten Sekundärteil 22, einem mit der ersten Hohlwelle 12 drehfest verbundenen zweiten Sekundärteil 23 und einem mit der zweiten Hohlwelle 14 drehbar verbundenen zweiten Primärteil 24. Diese Teile sind im gezeigten Ausführungsbeispiel jeweils als Kupplungsnaben ausgebildet. Zum Umschalten zwischen Straßen- und Geländegang werden sie durch eine erste Schaltmuffe 25 und eine zweite Schaltmuffe 26 jeweils in verschiedener Weise verbunden.

Die Kupplungseinheit 6 ist in zwei verschiedenen Stellungen abgebildet: unterhalb der Achse der Abtriebswelle 17 in der Stellung "Straßengang" und oberhalb in der Stellung "Geländegang". Im Straßengang verbindet die zweite Schaltmuffe 26 (Stellung 26') den ersten Primärteil 21 mit dem ersten Sekundärteil 22, somit die Eingangswelle 2 mit der Abtriebswelle 17. Die Schaltmuffe 25 erfüllt in dieser Stellung keine Funktion, die beiden Hohlwellen 12,14 sind daher frei, sie können während der Fahrt im Straßengang stillstehen. Das bedeutet, dass die ganze Untersetzungseinheit 5 stillsteht.

Im Geländegang verbindet die erste Schaltmuffe 25 den ersten Primärteil 21 mit dem zweiten Sekundärteil 23, somit die Eingangswelle 2 mit der ersten Hohlwelle 12, die den Eingang der Untersetzungseinheit 5 darstellt. Die zweite Schaltmuffe 26 verbindet den zweiten Primärteil 24 mit dem ersten Sekundärteil 22, somit die zweite Hohlwelle 14 mit der Abtriebswelle 17. Die Abtriebswelle 17 ist über eine Zuschaltkupplung 27 mit dem Treibrad 28 des Versatztriebes 7 antriebsverbunden. Der Versatztrieb selbst besteht hier aus dem Treibrad 28, einem Zwischenrad 29 und einem getriebenen Rad 30, könnte aber ebenso gut ein Zugmitteltrieb sein.

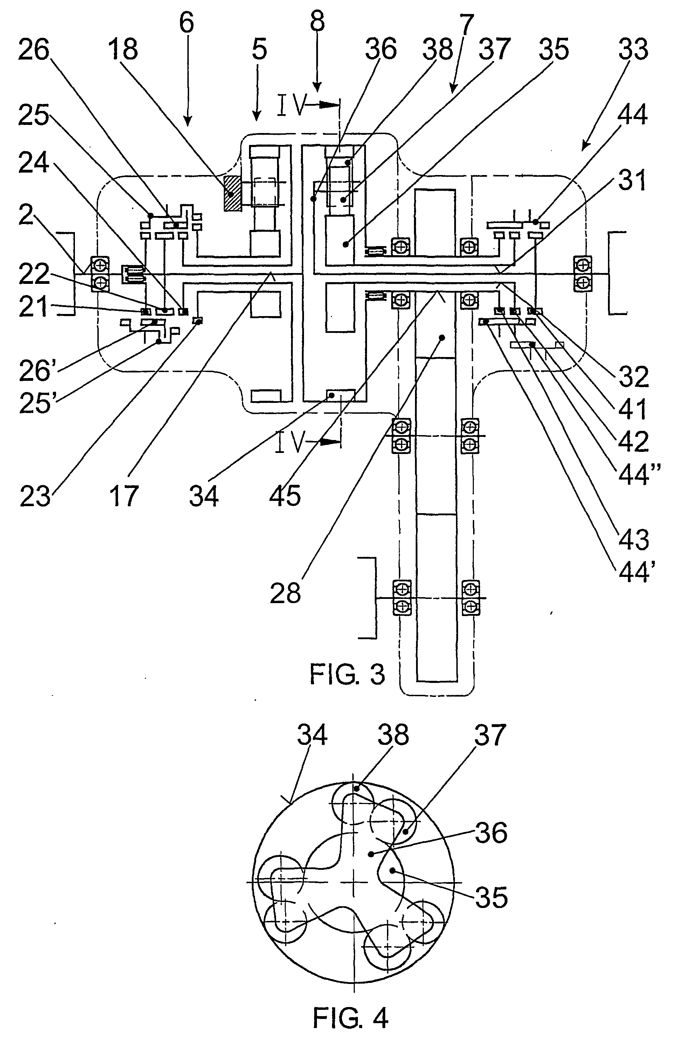

Fig. 3 zeigt das Verteilergetriebe in einer durch ein Zentraldifferential 8 erweiterten Bauform. Da sie sich nur durch das Zentraldifferential und eine geänderte Zuschaltkupplung unterscheidet, werden hier nur diese Baugruppen beschrieben. Die Abtriebswelle 17 führt hier nicht direkt zur ersten Ausgangswelle 3, sondern zu einem Zentraldifferential 8. Sie ist mit dessen Differential-Hohlrad 34 drehfest verbunden. Insgesamt besteht das Zentraldifferential 8 aus dem mit der Abtriebswelle 17 drehfest verbundenen Differential-Hohlrad 34, einem mit einer zweiten Achsantriebswelle 32 drehfest verbundenen Sonnenrad 35, und aus einem mit der ersten Achsantriebswelle 31 drehfest verbundenen Planetenträger 36 mit ersten und zweiten Planetenrädern 37,38, wobei jeweils die ersten Planetenräder 37 mit dem Sonnenrad 35, die zweiten Planetenräder 38 mit dem Differential-Hohlrad 34 und die ersten und zweiten Planetenräder 37,38 miteinander kämmen.

Fig. 4 zeigt die Eingriffverhältnisse im Zentraldifferential 8. Das Hohlrad 13 der Untersetzungsstufe 5 und das Differential-Hohlrad 34 und/oder die Zwischenzahnräder 15,16 und die Planetenräder 37,38 können Gleichteile sein.

Weiter zu Fig.3: Der Ausgang des Zentraldifferentiales 8 wird von einer ersten Achsantriebswelle 31 zum Antrieb der Hinterachse und von einer zweiten Achsantriebswelle 32 gebildet. Das Treibrad 28 des Versatztriebes 7 sitzt hier auf einer dritten Hohlwelle 45. Im Inneren dieser dritten Hohlwelle 45 befindet sich bei der gezeigten Anordnung zuerst die als Hohlwelle ausgebildete zweite Achsantriebswelle 32 und innerhalb dieser die erste Achsantriebswelle 31. Diese drei Wellen sind wieder durch eine Zuschaltkupplung 33 in verschiedene Weise verbindbar.

Die Zuschaltkupplung 33 besteht aus mit der ersten Achsantriebwelle 31 drehfest verbundenen ersten Kuppelteilen 41, mit der zweiten Achsantriebswelle 32 drehfest verbundenen zweiten Kuppelteilen 42, mit der dritten Hohlwelle 45 drehbar verbundenen dritten Kuppelteilen 43 und einer dritten verschiebbaren Kupplungsmuffe 44. Die Kuppelteile 41,42,43 sind in der dargestellten Ausführung Kuppelnaben mit Kuppelverzahnung.

Die dritte Kupplungsmuffe 44 kann drei Stellungen einnehmen: in der Stellung 44 (obere Bildhälfte) für Allradantrieb mit Differentialwirkung verbindet sie die zweiten Kuppelteile 42 mit den dritten Kuppelteilen 43, somit das Sonnenrad 35 mit der dritten Hohlwelle 45 und dem darauf angebrachten Treibrad 28 des Versatztriebes 7. In der zweiten Stellung 44' (untere Bildhälfte) für Allradantrieb mit gesperrtem Differential verbindet sie die ersten Kuppelteile 41 mit den zweiten und dritten Kuppelteilen 42, 43 somit die erste Achsantriebswelle 31 mit der dritten Hohlwelle 45 und außerdem zwei Glieder (Sonnenrad 35 und Planetenträger 36) des Zentraldifferentiales 8 miteinander. In der dritten Stellung 44" (herausgezogen, in dünner Linie) verbindet sie die ersten Kuppelteile 41 nur mit den zweiten Kuppelteilen 42, sodass die dritte Hohlwelle 45 frei drehbar und das Zentraldifferential 8 gesperrt ist.

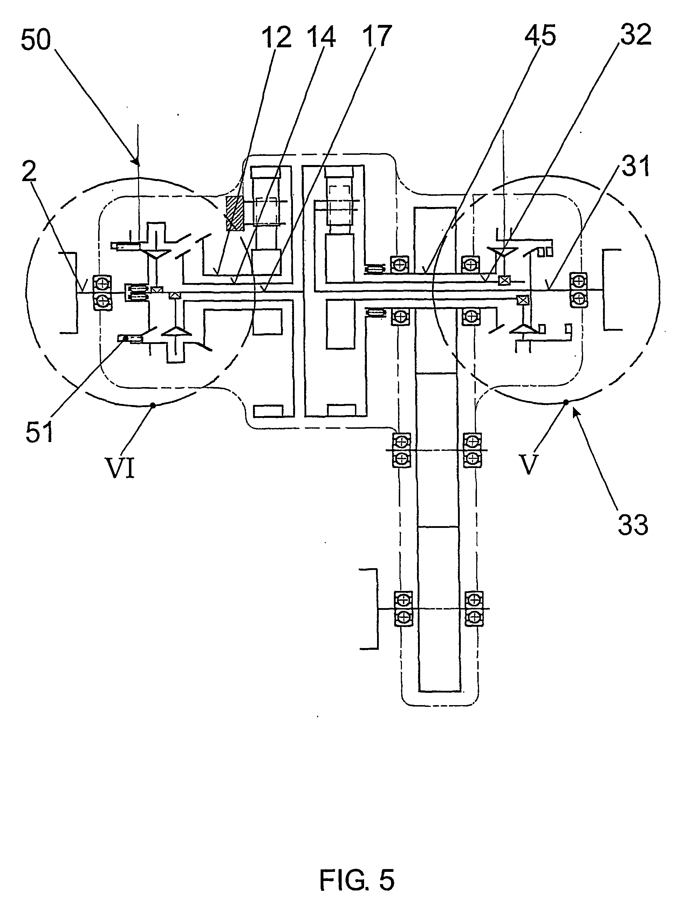

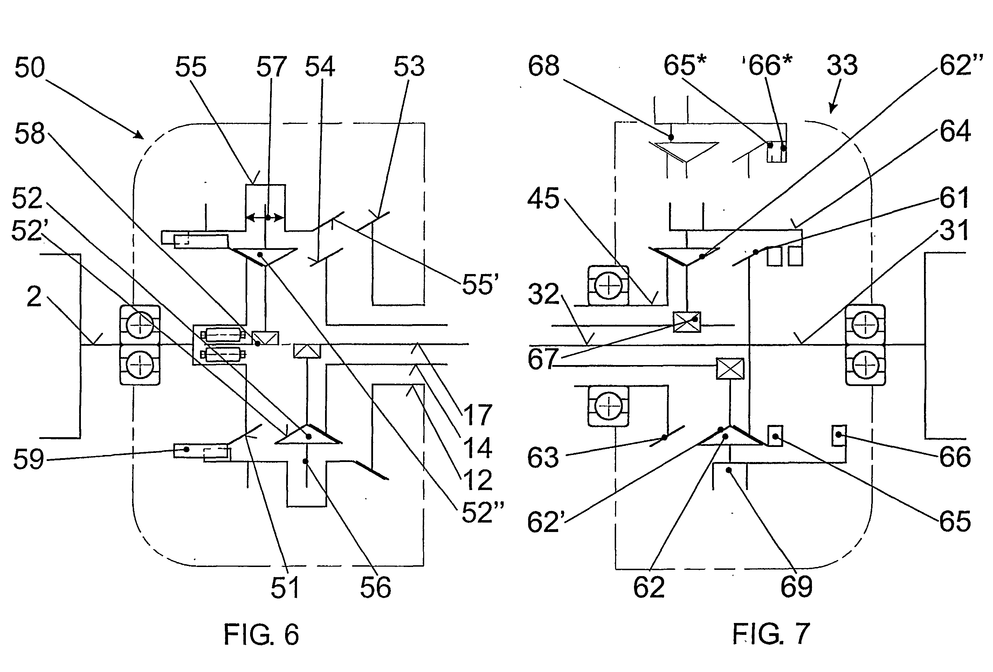

Die Ausführungsform der Fig. 5 unterscheidet sich von der der Fig. 3 nur dadurch, dass die Kupplungseinheit 50 für die Untersetzungseinheit und die Zuschaltkupplung 33 für das Zentraldifferential synchronisiert sind. Die beiden Kupplungen sind in Fig. 6 und 7 vergrößert gezeigt. Sie können in getrennten Gehäuseteilen an das Gehäuse 1 des Verteilergetriebes angeflanscht sein.

Die in Fig. 6 gezeigte synchronisierte Kupplungseinheit 50 besteht aus einem mit der Eingangswelle 2 drehfest verbundenen ersten Primärteil 51, einem drehfest aber achsial verschiebbar (Zahnwellenverbindung 58) mit der Eingangswelle 2 verbundenen ersten Sekundärteil 52, einem mit der ersten Hohlwelle 12 der Untersetzungseinheit 5 drehfest verbundenen zweiten Sekundärteil 53, einem mit der zweiten Hohlwelle 14 drehfest verbundenen zweiten Primärteil 54, einer ersten Schaltmuffe 55 und einer zweiten Schaltmuffe 56. Der erste Primärteil 51 ist wieder als Nabe mit einer synchronisierbaren Kontaktfläche und einer Hälfte einer Schiebekupplung 59 ausgeführt. Die Kontaktfläche kann eine Kuppelverzahnung mit zugehöriger Synchronisierung sein, worauf hier nicht näher eingegangen ist, da eine Vielzahl geeigneten Synchronisierungen bekannt ist. Der erste Sekundärteil 52 besitzt hier zwei Kontaktflächen 52', 52" und seine Nabe ist mittels einer Zahnwellenverbindung 5 8 auf der Abtriebswelle 17 achsial verschiebbar und ist ausserdem einstückig mit der zweiten Schaltmuffe 56. Zweiter Sekundärteil 53 und zweiter Primärteil 54 sind auch wieder synchronisierbar ausgebildet.

Durch Verschieben der zweiten Schaltmuffe 56 und damit des ersten Sekundärteiles 52 ist entweder die erste Kontaktfläche 52' mit dem ersten Primärteil 51 oder die zweite Kontaktfläche 52" mit dem zweiten Primärteil 54 in Eingriff bringbar. Die erste Schaltmuffe 55 tragt die andere Kupplungshälfte der Schiebekupplung 59, über die sie mit der zweiten Eingangswelle 2 immer drehfest verbunden ist. An ihrem anderen Ende besitzt sie eine weitere Kuppelfläche 55', die synchronisierbar mit dem zweiten Sekundärteil 53 in Eingriff bringbar ist. Weiters ist in ihr die zweite Schaltmuffe 56 frei drehbar und mit einem achsialen Spiel 57 geführt.

Die obere Bildhälfte zeigt die Stellung im Straßengang. Die Kraftübertragung erfolgt von der Eingangswelle 2 über den ersten Primärteil 51 auf die erste Kontaktfläche 52' des ersten Sekundärteiles 52 und von dort auf die Abtriebswelle 17. Zum Übergang in den Geländegang wird die erste Schaltmuffe 55 nach rechts verschoben, wobei sie wegen der Schiebekupplung 59 stets mit der Eingangswelle 2 antriebsverbunden bleibt. Beim Verschieben kommt zuerst die weitere Kontaktfläche 55' der ersten Schaltmuffe 55 mit dem zweiten Sekundärteil 53 in Berührung und synchronisiert so über die erste Hohlwelle 12 das zentrale Abtriebszahnrad 11 der Untersetzungseinheit 5. Bei weiterem Verschieben, bei dem das achsiale Spiel 57 zwischen den beiden Schaltmuffen 55,56 aufgebraucht wird, kommt auch die zweite Kontaktfläche 52" mit dem zweiten Primärteil 54 in Verbindung und synchronisiert die restlichen Teile. Auf diese Weise ist die Synchronisierung in zwei Phasen unterteilt.

Die Zuschaltkupplung 33 in Fig. 7 ist ähnlich aufgebaut. Sie besteht aus mit der ersten Achsantriebswelle drehfest verbundenem ersten Kuppelteilen 61, mit der zweiten Achsantriebswelle 32 drehfest aber mittels einer Zahnwellenverbindung 67 verschiebbar verbundenen zweiten Kuppelteilen 62, mit der dritten Hohlwelle 45 drehfest verbundenen dritten Kuppelteilen 63 und einer dritten Kupplungsmuffe 64. Die ersten Kuppelteile 61 sind wieder auf einer Nabe angeordnet und tragen zusätzlich erste Kuppelzähne 65. Ihre Kontaktfläche ist synchronisierbar, in welcher Weise auch immer. Die zweiten Kuppelteile 62 sind über eine Schiebeverbindung 68 drehfest mit der dritten Kupplungsmuffe 64 verbunden. Die zweiten Kuppelteile 62 sind wahlweise entweder mit ihrer ersten Kuppelfläche 62' mit den dritten Kuppelteilen 63 oder mit ihrer zweiten Kuppelfläche 62" mit den ersten Kuppelteilen 61 in Eingriff bringbar.

Weiters besitzt die dritte Kupplungsmuffe 64 zweite Kuppelzähne 66 zum Zusammmenwirken mit den ersten Kuppelzähnen 65 auf den ersten Kuppelteilen 61.

Es gibt drei Stellungen: Die erste Stellung (obere Bildhälfte) ist Allradantrieb mit Differentialwirkung. Die zweite Achsantriebswelle 32 ist mit der dritten Hohlwelle 45 verbunden. Die zweite Stellung (untere Bildhälfte) entspricht dem Antrieb nur der hinteren Achse über die erste Achsantriebswelle 31. Durch die drehfeste Verbindung der beiden Achsantriebswellen 31,32 über die ersten Kuppelteile 61 und die zweiten Kuppelteilen 62 ist das Differential so gesperrt. Zwischen diesen beiden Stellungen ist eine Neutralstellung möglich. Die dritte Stellung ist in dünner Linie über der ersten Bildhälfte angedeutet.

Bei weiterem Verschieben der dritten Kupplungsmuffe 64 aus der Stellung für Allradantrieb in der oberen Bildhälfte nach links, können sich die zweiten Kuppelteile 62 zwar nicht weiter nach links bewegen, jedoch kann sich durch die drehfeste Schiebeverbindung 68 die dritte Kupplungsmuffe 64 weiter verschieben, bis die ersten und zweiten Kuppelzähne 65,66 in Eingriff sind. Da dadurch die beiden Achsantriebswellen 31,32 fest miteinander verbunden sind, ist das Differential gesperrt. Die dritte Kupplungsmuffe 64 besitzt eine Ringnut 69, an der zum Schalten eine nicht dargestellte Schaltgabel angreifen kann.

## Patentansprüche

1. Verteilergetriebe für Kraftfahrzeuge mit Geländegang, bestehend aus einem Gehäuse, einer Eingangswelle (2), einer mit dieser koachsialen ersten Ausgangswelle, einer Untersetzungseinheit (5), einer Kupplungseinheit (6;50) und einem zuschaltbarenVersatztrieb (7), mit einer gegenüber der ersten Ausgangswelle versetzten zweiten Ausgangswelle, **dadurch gekennzeichnet,**
**dass** die Untersetzungseinheit (5) besteht aus:
a) einem zentralen Antriebszahnrad (11), das drehfest mit einer ersten Hohlwelle (12) verbunden ist,
b) einem ebenfalls zentralen Hohlrad (13), das drehfest mit einer zweiten Hohlwelle (14) verbunden ist,
c) ersten und zweiten Zwischenzahnrädern (15,16) mit gehäusefester Achse, wobei jeweils das erste Zwischenzahrad (15) mit dem zentralen Antriebszahnrad (11), das zweite Zwischenzahrad (16) mit dem zentralen Hohlrad (13) und erste und zweite Zwischenzahräder (15,16) miteinander kämmen,
d) einer Abtriebswelle (17), die direkt oder indirekt zur ersten Ausgangswelle führt,
und **dass** die Kupplungseinheit (6;50) besteht aus:
e) Primärteilen (21,24;51,54) auf der Eingangswelle (2) und auf der zweiten Hohlwelle (14), sowie Sekundärteilen (22,23;52,53) auf der Abtriebswelle (17) und auf der ersten Hohlwelle (12), wobei die Primärteile und Sekundärteile mit zwei Schaltmuffen zusammenarbeiten, wobei
f) die erste Schaltmuffe (25;55) zur drehfesten Verbindung der Eingangswelle (2) mit der ersten Hohlwelle (12) im Geländegang und
g) die zweite Schaltmuffe (26;56) zur drehfesten Verbindung der Eingangswelle (2) mit der Abtriebswelle (17) im Strassengang, und zur drehfesten Verbindung der zweiten Hohlwelle (14) mit der Abtriebswelle (17) im Geländegangdient.

2. Verteilergetriebe nach Anspruch 1, **dadurch gekennzeichnet, dass** die Kupplungseinheit (6) auf der der Eingangswelle (2) zugewandten Seite der Untersetzungseinheit (5) und die zweite Hohlwelle (14) innerhalb der ersten Hohlwelle (12) angeordnet ist.

3. Verteilergetriebe nach Anspruch 1, **dadurch gekennzeichnet, dass** die Abtriebswelle (17) über eine Zuschaltkupplung (27) mit einem Treibrad (28) des Versatzantriebes (7) drehfest verbindbar ist.

4. Verteilergetriebe nach Anspruch 2, **dadurch gekennzeichnet, dass** die Abtriebswelle (17) mit einem als Planetengetriebe ausgeführten Zentraldifferential (8) antriebsverbunden ist, das zwei Achsantriebswellen (31, 32) aufweist, von denen wahlweise jeweils die eine oder andere über eine Zuschaltkupplung (33) mit einem Treibrad (28) des Versatztriebes (7) drehfest verbindbar sind.

5. Verteilergetriebe nach Anspruch 4, **dadurch gekennzeichnet, dass** das Zentraldifferential (8) besteht aus:
a) einem mit der Abtriebswelle (17) drehfest verbundenen Differential-Hohlrad (34),
b) einem mit einer zweiten Achsantriebswelle (32) drehfest verbundenen Sonnenrad (35),
c) einem mit der ersten Achsantriebswelle (31) drehfest verbundenen Planetenträger (36) mit ersten und zweiten Planetenrädern (37,38), wobei jeweils die erste Planetenräder (37) mit dem Sonnenrad (35), die zweiten Planetenräder (38) mit dem Differential-Hohlrad (34) und erste und zweite Planetenräder (37,38) miteinander kämmen.

6. Verteilergetriebe nach Anspruch 5, **dadurch gekennzeichnet, dass** das Hohlrad (13) und das Differential-Hohlrad (34) und/oder die Zwischenzahnräder (15,16) und die Planetenräder (37,38) Gleichteile sind.

7. Verteilergetriebe nach Anspruch 5, **dadurch gekennzeichnet, dass** die Zuschaltkupplung (33) umfasst:
a) mit der ersten Achsantriebswelle (31) drehfest verbundene erste Kuppelteile (41;61),
b) mit der zweiten Achsantriebswelle (32) drehfest verbundene zweite Kuppelteile (42;62),
c) mit dem Treibrad (28) des Versatzantriebes (7) drehfest verbundene dritte Kuppelteile (43;63),
d) eine dritte Kupplungsmuffe (44;64), die bei Zweiradantrieb die ersten (31) und die zweite (32) Achsantriebswelle miteinander drehfest verbindet, bei Vierradantrieb die zweite Achsantriebswelle (32) und den Versatztrieb (7), und bei Vierradantrieb mit Differentialsperre die erste Achsantriebswelle (31) und den Versatztrieb (7).

8. Verteilergetriebe nach Anspruch 4, **dadurch gekennzeichnet, dass** die Untersetzungseinheit (5) und das Zentraldifferential (8) unmittelbar benachbart angeordnet sind, worauf in Richtung zur ersten Ausgangswelle (3) zuerst der Versatztrieb (7) und dann die Zuschaltkupplung (33) folgt.

9. Verteilergetriebe nach Anspruch 1 mit synchronisierten Kupplungseinheiten, **dadurch gekennzeichnet, dass** die zweite Schaltmuffe (56) drehfest, aber achsial verschiebbar mit der Abtriebswelle (17) verbunden ist,

10. Verteilergetriebe nach Anspruch 9, **dadurch gekennzeichnet, dass** die erste Schaltmuffe (55) und die zweite Schaltmuffe (56) gemeinsam in Achsrichtung verschiebbar sind, jedoch mit achsialem Spiel, sodass beim Zurückschalten in den Geländegang zuerst die erste Schaltmuffe (55) mit der ersten Hohlwelle (12) synchronisert und dann die zweite Schaltmuffe (56) mit der zweiten Hohlwelle (14).

11. Verteilergetriebe nach Anspruch 7 mit synchronisierenden Kupplungseinheiten, **dadurch gekennzeichnet, dass** die dritte Schaltmuffe (64) erste Kuppelteile (62) aufweist, die drehfest, aber achsial verschiebbar mit der zweiten Achsantriebswelle (32) verbunden sind.

12. Verteilergetriebe nach Anspruch 11, **dadurch gekennzeichnet, dass** die ersten Kuppelteile (62) bezüglich der dritten Schaltmuffe (64) in achsialer Richtung verschiebbar sind.

## Claims

1. A power-split transmission for motor vehicles with off-road travel, consisting of a case, of an input shaft (2), of a first output shaft (3;31) coaxial with the latter, of a reduction unit (5), of a clutch unit (6;50) and of an engageable offset drive (7) with a second output shaft offset with respect to said first output shaft, **characterized in that** the reduction unit (5) consists of:
a) a central driving gearwheel (11) which is connected fixedly in terms of rotation to a first hollow shaft (12),
b) a likewise central ring gear (13) which is cohnected fixedly in terms of rotation to a second hollow shaft (14),
c) first and second intermediate gearwheels (15, 16) with an axle fixed to the case, in each case the first intermediate gearwheel (15) meshing with the central driving gearwheel (11), the second intermediate gearwheel (16) with the central ring gear (13) and the first and second intermediate gearwheels (15, 16) with one another,
d) a power take-off shaft (17)directly or indirectly leading to the first output shaft (3;31),
and that the clutch unit (6; 50) consists of:
e) primary parts (21, 24; 51, 54) on the input shaft (2), and on the second hollow shaft (14) and secondary parts (22, 23; 52, 53) on the power take-off shaft (17) and on the first hollow shaft (12),whereby primary parts (21, 24; 51, 54) and secondary parts (22, 23; 52, 53) cooperate with two shift sleeves (25,26; 55,56)
f) the first shift sleeve (25; 55) providing for the rotationally fixed connection of the input shaft (2) to the first hollow shaft (12) in off-road travel, and
g) the second shift sleeve (26; 56) providing for the rotationally fixed connection of the input shaft (2) to the power take-off shaft (17) in road travel and for the rotationally fixed connection of the second hollow shaft (14) to the power take-off shaft (17) in off-road travel.

2. The power-split transmission as claimed in claim 1, **characterized in that** the clutch unit (6) is arranged on that side of the reduction unit (5) which faces the input shaft (2) and the second hollow shaft (14) is arranged within the first hollow shaft (12).

3. The power-split transmission as claimed in claim 1, **characterized in that** the power take-off shaft (17) can be connected fixedly in terms of rotation to a driving wheel (28) of the offset drive (7) via a cut-in clutch (27).

4. The power-split transmission as claimed in claim 2, **characterized in that** the power take-off shaft (17) is drive-connected to a central differential (8) which is designed as a planetary transmission and which has two axle drive shafts (.31, 32), in each case one or other of which can selectively be connected fixedly in terms of rotation to a driving wheel (28) of the offset drive (7) via a cut-in clutch (33).

5. The power-split transmission as claimed in claim 4, **characterized in that** the central differential (8) consists of:
a) a differential ring gear (34) connected fixedly in terms of rotation to the power take-off shaft (17),
b) a sun wheel (35) connected fixedly in terms of rotation to a second axle drive shaft (32),
c) a planet carrier (36) connected fixedly in terms of rotation to the first axle drive shaft (31) and having first and second planet wheels (37, 38), in each case the first planet wheels (37) meshing with the sun wheel (35), the second planet wheels (18) with the differential ring gear (34) and the first and second planet wheels (37, 38) with one another.

6. The power-split transmission as claimed in claim 5, **characterized in that** the ring gear (13) and the differential ring gear (34) and/or the intermediate gearwheels (15, 16) and the planet wheels (37, 38) are identical parts.

7. The power-split transmission as claimed in claim 5, **characterized in that** the cut-in clutch (33) comprises:
a) first coupling parts (41; 61) connected fixedly in terms of rotation to the first axle drive shaft (31),
b) second coupling parts (42; 62) connected fixedly in terms of rotation to the second axle drive shaft (32),
c) third coupling parts (43; 63) connected fixedly in terms of rotation to the driving wheel (28) of the offset drive (7),
d) a third clutch sleeve (44; 64) which, in two-wheel drive, connects the first (31) and the second (32) axle drive shafts to one another fixedly in terms of rotation, in four-wheel drive connects the second axle drive shaft (32) and the offset drive (37) to one another fixedly in terms of rotation and, in four-wheel drive with differential lock, connects the first axle drive shaft (31) and the offset drive (7) to one another fixedly in terms of rotation.

8. The power-split transmission as claimed in claim 4, **characterized in that** the reduction unit (5) and the central differential (8) are arranged directly adjacently, being followed in the direction of the first output shaft (3) first by the offset drive (7) and then by the cut-in clutch (33).

9. The power-split transmission as claimed in claim 1, with synchronized clutch units, **characterized in that** the second shift sleeve (56) is connected fixedly in terms of rotation, but axially displaceably, to the power take-off shaft (17).

10. The power-split transmission as claimed in claim 9, **characterized in that** the first shift sleeve (55) and the second shift sleeve (56) are jointly displaceable in the axial direction, but with axial play, so that, during the shift back into off-road travel, first the first shift sleeve (55) is synchronized with the first hollow shaft (12) and then the second shift sleeve (56) is synchronized with the second hollow shaft (14).

11. The power-split transmission as claimed in claim 7, with synchronizing clutch units, **characterized in that** the third shift sleeve (64) has first coupling parts (62) which are connected fixedly in terms of rotation, but axially displaceably, to the second axle drive shaft (32).

12. The power-split transmission as claimed in claim 11, **characterized in that** the first coupling parts (62) are displaceable in the axial direction with respect to the third shift sleeve (64).

## Revendications

1. Boîte de vitesses intermédiaire pour véhicules tout-terrain, constituée par
un boîtier, un arbre d'entrée (2), un premier arbre de sortie coaxial audit arbre d'entrée, une unité de réduction (5), une unité d'embrayage (6 ; 50), et une unité de décentrage (7) pouvant être couplée au premier arbre de sortie, **caractérisée en ce que** l'unité de réduction (5) est constituée par :
a) une roue dentée centrale d'entraînement (11) qui est reliée fixe en rotation à un premier arbre creux (12),
b) une couronne de train planétaire (13), également centrale, qui est reliée fixe en rotation à un deuxième arbre creux (14),
c) des première et deuxième roues dentées intermédiaires (15, 16) comportant un axe fixe par rapport au boîtier, la première roue dentée intermédiaire (15) s'engrenant avec la roue dentée centrale d'entraînement (11), la deuxième roue dentée intermédiaire (16) s'engrenant avec la couronne de train planétaire centrale (13), et les première et deuxième roues dentées intermédiaires (15, 16) s'engrenant l'une avec l'autre,
d) un arbre mené (17) qui mène directement ou indirectement au premier arbre de sortie,
et **en ce que** l'unité d'embrayage (6 ; 50) est constituée par :
e) des pièces primaires (21, 24 ; 51, 54) agencées sur l'arbre d'entrée (2) et sur le deuxième arbre creux (14), ainsi que des pièces secondaires (22, 23 ; 52, 53) agencées sur l'arbre mené (17) et sur le premier arbre creux (12), lesdites pièces primaires et lesdites pièces secondaires coopérant avec deux manchons de changement de vitesse, et
f) le premier manchon de changement de vitesse (25 ; 55) servant à relier fixe en rotation l'arbre d'entrée (2) au premier arbre creux (12) en tout-terrain, et
g) le deuxième manchon de changement de vitesse (26 ; 56) servant à relier fixe en rotation l'arbre d'entrée (2) à l'arbre mené (17) sur route, et à relier le deuxième arbre creux (14) à l'arbre mené (17) en tout-terrain.

2. Boîte de vitesses intermédiaire selon la revendication 1, **caractérisée en ce que** l'unité d'embrayage (6) est disposée du côté de l'unité de réduction (5) qui est dirigé vers l'arbre d'entrée (2), et le deuxième arbre creux (14) est agencé à l'intérieur du premier arbre creux (12).

3. Boîte de vitesses intermédiaire selon la revendication 1, **caractérisée en ce que** l'arbre mené (17) peut être relié fixe en rotation à une roue motrice (28) de l'unité d'entraînement à décentrage (7) via un embrayage (27).

4. Boîte de vitesses intermédiaire selon la revendication 2, **caractérisée en ce que** l'arbre mené (17) est relié en entraînement à un différentiel central (8) qui est réalisé sous la forme d'un engrenage planétaire, et qui comporte deux arbres d'entraînement d'essieu (31, 32) dont l'un ou l'autre, au choix, peut être relié à une roue motrice (28) de l'unité d'entraînement à décentrage (7) via un embrayage (33).

5. Boîte de vitesses intermédiaire selon la revendication 4, **caractérisée en ce que** le différentiel central (8) est constitué par :
a) une couronne de train planétaire de différentiel (34) reliée fixe à l'arbre mené (17),
b) une roue solaire (35) reliée fixe en rotation au deuxième arbre d'entraînement d'essieu (32),
c) une cage de transmission planétaire (36) reliée fixe en rotation au premier arbre d'entraînement d'essieu (31), et comportant des premières et deuxièmes roues planétaires (37, 38), les premières roues planétaires (37) s'engrenant avec la roue solaire (35), les deuxièmes roues planétaires (38) s'engrenant avec la couronne de train planétaire de différentiel (34), et les premières et deuxièmes roues planétaires (37, 38) s'engrenant l'une avec l'autre.

6. Boîte de vitesses selon la revendication 5, **caractérisée en ce que** la couronne de train planétaire (13), la couronne de train planétaire de différentiel (34) et/ou les roues dentées intermédiaires (15, 16) et les roues planétaires (37, 38) sont des pièces identiques.

7. Boîte de vitesses intermédiaire selon la revendication 5, **caractérisée en ce que** l'embrayage (33) comporte :
a) des premières pièces d'embrayage (41 ; 61) reliées fixes en rotation au premier arbre d'entraînement d'essieu (31),
b) des deuxièmes pièces d'embrayage (42 ; 62) reliées fixes en rotation au deuxième arbre d'entraînement d'essieu (32),
c) des troisièmes pièces d'embrayage (43 ; 63) reliées fixes en rotation à la roue motrice (28) de l'unité d'entraînement à décentrage (7),
d) un troisième manchon d'embrayage (44 ; 64) qui relie l'un à l'autre, et fixe en rotation, le premier arbre d'entraînement d'essieu (31) et le deuxième arbre d'entraînement d'essieu (32) dans le cas d'un entraînement à deux roues motrices, le deuxième arbre d'entraînement d'essieu (32) et l'unité d'entraînement à décentrage (7) dans le cas d'un entraînement à quatre roues motrices, et le premier arbre d'entraînement d'essieu (31) et l'unité d'entraînement à décentrage (7) dans le cas d'un entraînement à quatre roues motrices avec blocage du différentiel.

8. Boîte de vitesses intermédiaire selon la revendication 4, **caractérisée en ce que** l'unité de réduction (5) et le différentiel central (8) sont disposés directement l'un à côté de l'autre, à quoi fait suite, en direction du premier arbre de sortie (3), tout d'abord l'unité d'entraînement à décentrage (7), puis l'embrayage (33).

9. Boîte de vitesses intermédiaire selon la revendication 1, comportant des unités d'embrayage synchronisées, **caractérisée en ce que** le deuxième manchon de changement de vitesse (56) est relié, fixe en rotation mais déplaçable axialement, à l'arbre mené (17).

10. Boîte de vitesses intermédiaire selon la revendication 9, **caractérisée en ce que** le premier manchon de changement de vitesse (55) et le deuxième manchon de changement de vitesse (56) sont déplaçables conjointement dans la direction axiale, mais avec un jeu axial, de sorte que, lorsque l'on rétrograde en tout-terrain, le premier manchon de changement de vitesse (55) est tout d'abord synchronisé avec le premier arbre creux (12), puis le deuxième manchon de changement de vitesse (56) est synchronisé avec le deuxième arbre creux (14).

11. Boîte de vitesses intermédiaire selon la revendication 7, comportant des unités d'embrayage synchrones, **caractérisée en ce que** le troisième manchon de changement de vitesse (64) comporte des premières pièces d'embrayage (62) qui sont reliées, fixes en rotation mais déplaçables axialement, au deuxième arbre d'entraînement d'essieu (32).

12. Boîte de vitesses intermédiaire selon la revendication 11, **caractérisée en ce que** les premières pièces d'embrayage (62) sont déplaçables axialement par rapport au troisième manchon de changement de vitesse (64).
